# EUROPÄISCHE PATENTSCHRIFT

(11) **EP 1 530 855 B1**
(45) Veröffentlichungstag und Bekanntmachung des Hinweises auf die Patenterteilung: **28.11.2007**
(21) Anmeldenummer: 03793696.0
(22) Anmeldetag: 06.08.2003
(51) Int. Cl.: H04L 12/56

(54) **VERFAHREN ZUR VERGABE VON FUNKRESSOURCEN IN EINEM SELBSTORGANISIERENDEN FUNKKOMMUNIKATIONSSYSTEM**
METHOD FOR ALLOCATING RADIO COMMUNICATION RESOURCES IN A SELF-ORGANISING RADIO COMMUNICATIONS SYSTEM
PROCEDE D'ATTRIBUTION DE RESSOURCES RADIO DANS UN SYSTEME DE COMMUNICATION RADIO AUTO-ORGANISE

(30) Priorität: 13.08.2002 EP 02255631
(43) Veröffentlichungstag der Anmeldung: 18.05.2005
(73) Patentinhaber: NOKIA SIEMENS NETWORKS GMBH & CO. KG, 81541 München (DE)
(72) Erfinder: HALFMANN, Rüdiger, 67697 Otterberg (DE); KRÄMLING, Andreas, 53225 Bonn (DE); LI, Hui, 80937 München (DE); LOTT, Matthias, 82061 Neuried (DE); SCHULZ, Egon, 80993 München (DE); SIEBERT, Matthias, 52072 Aachen (DE); WECKERLE, Martin, 89077 Ulm (DE)
(86) Internationale Anmeldenummer: PCT/EP2003/008716
(87) Internationale Veröffentlichungsnummer: WO 2004/023738

(56) Entgegenhaltungen:
- EP-A- 0 004 179
- US-A- 4 534 061
- US-A- 5 995 500
- US-A- 6 069 896
- US-A1- 2002 068 548
- US-A1- 2002 068 558
- "Broadband Radio Access Networks (BRAN); HIPERLAN Type 2; Data Link Control (DLC) Layer; Part 1: Basic Data Transport Functions" ETSI TS 101 761-1 V1.3.1, Dezember 2001 (2001-12), Seiten 1-88, XP002257268 in der Anmeldung erwähnt
- CROW B P ET AL: "Investigation of the IEEE 802.11 medium access control (MAC) sublayer functions" INFOCOM '97. SIXTEENTH ANNUAL JOINT CONFERENCE OF THE IEEE COMPUTER AND COMMUNICATIONS SOCIETIES. DRIVING THE INFORMATION REVOLUTION., PROCEEDINGS IEEE KOBE, JAPAN 7-11 APRIL 1997, LOS ALAMITOS, CA, USA,IEEE COMPUT. SOC, US, 7. April 1997 (1997-04-07), Seiten 126-133, XP010252020 ISBN: 0-8186-7780-5

## Beschreibung

Die Erfindung betrifft ein Verfahren zur Vergabe von Funkressourcen in einem zumindest teilweise selbstorganisierenden Funkkommunikationssystem mit mehreren Teilnehmerstationen nach dem Oberbegriff des Anspruchs 1.

Die Erfindung betrifft ferner ein Funkkommunikationssystem mit mehreren Teilnehmerstationen nach dem Oberbegriff des Anspruchs 5.

Kommunikationssysteme haben eine große Bedeutung im wirtschaftlichen, aber auch im privaten Bereich. Es sind starke Bestrebungen vorhanden, kabelgebundene Kommunikationssysteme mit Funkkommunikationssystemen zu verknüpfen. Die entstehenden hybriden Kommunikationssysteme führen zu einer Erhöhung der Zahl der zur Verfügung stehenden Dienste, ermöglichen aber auch eine größere Flexibilität auf Seiten der Kommunikation. So werden Geräte entwickelt, die unterschiedliche Systeme nutzen können (Multi Homing).

Den Funkkommunikationssystemen kommt dabei aufgrund der ermöglichten Mobilität der Teilnehmer eine große Bedeutung zu.

In Funkkommunikationssystemen werden Informationen (beispielsweise Sprache, Bildinformation, Videoinformation, SMS [Short Message Service] oder andere Daten) mit Hilfe von elektromagnetischen Wellen über eine Funkschnittstelle zwischen sendender und empfangender Station (Basisstation bzw. Teilnehmerstation) übertragen. Das Abstrahlen der elektromagnetischen Wellen erfolgt dabei mit Trägerfrequenzen, die in dem für das jeweilige System vorgesehenen Frequenzband liegen.

Für das eingeführte GSM-Mobilfunksystem (Global System for Mobile Communication) werden Frequenzen bei 900, 1800 und 1900 MHz genutzt. Diese Systeme übermitteln im wesentlichen Sprache, Telefax und Kurzmitteilungen SMS (Short Message Service) als auch digitale Daten.

Für zukünftige Mobilfunksysteme mit CDMA- oder TD/CDMA-Übertragungsverfahren, wie beispielsweise UMTS (Universal Mobile Telecommunication System) oder andere Systeme der dritten Generation, sind Frequenzen im Frequenzband von ca. 2000 MHz vorgesehen. Diese Systeme der dritten Generation werden entwickelt mit den Zielen weltweiter Funkabdeckung, einem großen Angebot an Diensten zur Datenübertragung und vor allem eine flexible Verwaltung der Kapazität der Funkschnittstelle, die bei Funk-Kommunikationssystemen die Schnittstelle mit den geringsten Ressourcen ist. Bei diesen Funk-Kommunikationssystemen soll es vor allem durch die flexible Verwaltung der Funkschnittstelle möglich sein, dass einer Teilnehmerstation bei Bedarf eine große Datenmenge mit hoher Datengeschwindigkeit senden und/oder empfangen kann.

Der Zugriff von Stationen auf die gemeinsamen Funkressourcen des Übertragungsmedium, wie zum Beispiel Zeit, Frequenz, Leistung oder Raum, wird bei diesen Funk-Kommunikationssystemen durch Vielfachzugriffsverfahren (Multiple Access, MA) geregelt.

Bei Zeitbereichs-Vielfachzugriffsverfahren (TDMA) wird jedes Sende- und Empfangsfrequenzband in Zeitschlitze unterteilt, wobei ein oder mehrere zyklisch wiederholte Zeitschlitze den Stationen zugeteilt werden. Durch TDMA wird die Funkressource Zeit stationsspezifisch separiert.

Bei Frequenzbereichs-Vielfachzugriffsverfahren (FDMA) wird der gesamte Frequenzbereich in schmalbandige Bereiche unterteilt, wobei ein oder mehrere schmalbandige Frequenzbänder den Stationen zugeteilt werden. Durch FDMA wird die Funkressource Frequenz stationsspezifisch separiert.

Bei Codebereichs-Vielfachzugriffsverfahren (CDMA) wird durch einen Spreizcode, der aus vielen einzelnen sogenannten Chips besteht, die zu übertragende Leistung/Information stationsspezifisch codiert, wodurch die zu übertragende Leistung codebedingt zufällig über einen großen Frequenzbereich gespreizt wird. Die von unterschiedlichen Stationen benutzen Spreizcodes innerhalb einer Zelle/Basisstation sind jeweils gegenseitig orthogonal oder im wesentlichen orthogonal, wodurch ein Empfänger die ihm zugedachte Signalleistung erkennt und andere Signale unterdrückt. Durch CDMA wird die Funkressource Leistung durch Spreizcodes stationsspezifisch separiert.

Bei orthogonalen Frequenz-Vielfachzugriffsverfahren (OFDM) werden die Daten breitbandig übermittelt, wobei das Frequenzband in äquidistante, orthogonale Unterträger eingeteilt wird, so dass die simultane Phasenverschiebung der Unterträger einen zwei-dimensionalen Datenfluss im Zeit-Frequenz Bereich aufspannt. Durch OFDM wird die Funkressource Frequenz mittels orthogonalen Unterträgern stationsspezifisch separiert. Die während einer Zeiteinheit auf den orthogonalen Unterträgern übermittelten zusammengefassten Datensymbole werden als OFDM Symbole bezeichnet.

Die Vielfachzugriffsverfahren können kombiniert werden. So benutzen viele Funkkommunikationssysteme eine Kombination der TDMA und FDMA Verfahren, wobei jedes schmalbandige Frequenzband in Zeitschlitze unterteilt ist.

Für das erwähnte UMTS-Mobilfunksystem wird zwischen einem sogenannten FDD-Modus (Frequency Division Duplex) und einem TDD-Modus (Time Division Duplex) unterschieden. Der TDD-Modus zeichnet sich insbesondere dadurch aus, dass ein gemeinsames Frequenzband sowohl für die Signalübertragung in Aufwärtsrichtung (UL - Uplink) als auch in Abwärtsrichtung (DL - Downlink) genutzt wird, während der FDD-Modus für die beiden Übertragungsrichtungen jeweils ein unterschiedliches Frequenzband nutzt.

In Funkkommunikationsverbindungen der zweiten und/oder dritten Generation können Informationen kanalvermittelt (CS Circuit Switched) oder paketvermittelt (PS Packet Switched) übertragen werden.

Die Verbindung zwischen den einzelnen Stationen erfolgt über eine Funkkommunikations-Schnittstelle. Basisstation und Funknetzwerkkontrolleinrichtung sind üblicherweise Bestandteile eines Basisstationssubsystems (RNS Radio Network Subsystem). Ein zellulares Funkkommunikationssystem umfasst in der Regel mehrere Basisstationssubsysteme, die an ein Kernnetz (CN Core Network) angeschlossen sind. Dabei ist die Funknetzwerkkontrolleinrichtung des Basisstationssubsystems in der Regel mit einer Zugangseinrichtung des Kernnetzes verbunden.

Neben diesen hierarchisch organisierten zellularen Funkkommunikationssystemen gewinnen selbstorganisierende drahtlose Funkkommunikationssysteme - beispielsweise sogenannte Ad Hoc Systeme - zunehmend an Bedeutung, auch in zellularen Funkkommunikationssystemen.

Ein grundlegendes Problem bei selbstorganisierenden drahtlosen Funkkommunikationssystemen stellt die Organisation und die Steuerung der Vergabe der Funkressourcen dar. Funkressourcen zur Übertragung von Nachrichten zeichnen sich dadurch aus, dass sie physikalisch getrennte Übertragungseinheiten darstellen, die zueinander orthogonal oder im wesentlichen orthogonal sind hinsichtlich des Frequenzbereichs und/oder des Zeitbereichs und/oder eines Codes.

In zellularen Funkkommunikationssystemen wird die Vergabe der Funkressourcen durch eine zentrale Instanz überwacht und gesteuert. Häufig findet in zellularen Funkkommunikationssystemen, wie z.B. GSM oder UMTS, die Kommunikation nur zwischen den mobilen Endgeräten und der zentralen Instanz statt.

Selbstorganisierende Funkkommunikationssysteme erlauben darüber hinaus im allgemeinen auch die direkte Kommunikation zwischen mobilen Endgeräten und besitzen nicht notwendigerweise eine zentrale Instanz, die den Zugriff auf das Übertragungsmedium steuert.

Beispielsweise in Funkkommunikationssystemen nach dem Standard IEEE 802.11 ist keine zentral organisierte Vergabe der Funkressourcen vorgesehen. Das verwendete MAC-Protokoll (MAC Medium Access Control Protocol) zur Organisation des Zugriffs auf das Übertragungsmedium ist dezentral, wodurch keine optimale Ausnutzung der verfügbaren Ressourcen möglich ist.

Das Ausnutzen von zentralen Instanzen in selbstorganisierenden Funkkommunikationssystemen zur Steuerung des Medienzugriffs (centralized medium access control) und damit der Ressourcenvergabe, wie sie z.B. in HIPERLAN/2 und Bluetooth verwendet werden, erlaubt eine gezieltere und damit effizientere Nutzung der Ressourcen. Hierbei sind mehrere Teilnehmerstationen bzw. Endgeräte einer zentralen Instanz zugeordnet. Die zur Organisation der Ressourcenvergabe von der zentralen Instanz verwendeten Konzepte berücksichtigen, dass weder für die Kommunikation zwischen dieser zentralen Instanz und verschiedenen mobilen Endgeräten noch für die direkte Kommunikation zwischen verschiedenen mobilen Endgeräten eine Ressource mehrfach vergeben wird. Denn das mehrfache Ausnutzen der gleichen Ressource bei der Übertragung von Nachrichten zwischen unterschiedlichen Paaren von Kommunikationspartnern führt im allgemeinen zu Interferenzen bzw. zu gegenseitigen Störungen der jeweiligen Übertragungen.

In zellularen Mobilfunkkommunikationssystemen können durch ein Wiederverwenden der gleichen Frequenzen in unterschiedlichen Zellen (frequency reuse) systemweit gesehen die gleichen Ressourcen mehrfach verwendet werden. Dies ist beispielsweise bekannt aus:
J. Zander, M. Frodigh, "Capacity Allocation and Channel Assignment in Cellular Radio Systems Using Reuse Partitioning", Electronics Letters, vol 28, no. 5, 1992, pp. 438-440
oder
R. Borndörfer, A. Eisenblätter, M. Grötschel, A, Martin, "Frequency assignment in cellular phones networks", Annals of Operation Research, vol. 76, 1998.

Wird in jeder Zelle die gleiche Frequenz wiederverwendet, kann es insbesondere für Teilnehmerstationen bzw. mobile Endgeräte (mobile terminals, MTs) am Zellrand zu erheblichen Interferenzen kommen. Aus diesem Grund werden häufig sogenannte Cluster gebildet, in denen mehrere Zellen (z.B. 3, 7, ...) zusammengefasst werden in denen keine Frequenz doppelt verwendet wird. Die Anzahl der in einem Cluster zusammengefassten Zellen wird als Cluster-Größe bezeichnet. Wiederholt man diese Cluster-Struktur durch entsprechende räumliche Anordnung über das gesamte zellulare System, so kann gewährleistet werden, dass zwei Zellen, in denen die gleiche Frequenz verwendet wird, jeweils durch mindestens eine Zelle in der eine andere Frequenz verwendet wird (im Falle Cluster-Größe gleich 3 ist es exakt eine Zelle) räumlich getrennt sind.

In selbstorganisierenden Netzen nach dem Standard IEEE 802.11, siehe hierzu beispielsweise:
"Local and metropolitan area networks - Specific requirements - Part 11: Wireless LAN Medium Access Control (MAC) and Physical Layer (PHY) Specifications", IEEE P802.11/D10, 1999,
findet die Vergabe bzw. Belegung von Ressourcen für die Kommunikation zwischen Teilnehmerstationen ohne die Unterstützung einer zentralen Instanz statt. Das hierfür verwendete MAC-Protokoll basiert auf dem Vielfachzugriffsverfahren CSMA/CA (Carrier Sense Multiple Access with Collision Avoidance).

Soll zwischen einer Station A (Sender) und einer Station B (Empfänger) eine Übertragung zustande kommen, so wird von A zunächst die Frequenz auf der übertragen werden soll abgehört. Ist das Übertragungsmedium für eine spezifizierte Dauer frei (Distributed Inter Frame Space, DIFS), d.h. wird die Frequenz nicht gerade für eine andere Übertragung genutzt, so sendet A ein Request to Send (RTS) Control Frame aus, der Informationen über die zu übertragende Datenmenge enthält. Antwortet die Gegenstelle B mit einem Clear to Send (CTS) Control Frame, so kann die Übertragung stattfinden. Empfängt A den CTS Control Frame nicht innerhalb eines bestimmten Zeitrahmens, so wird A nach einer zufälligen Wartezeit erneut versuchen eine Übertragung zu realisieren. Wenn B die Daten von A korrekt empfangen hat, sendet B ein Acknowledgement-Paket (ACK-Paket) aus.

Um Kollisionen bei Übertragungen zwischen mehreren Stationen zu vermeiden, darf jede andere Station C, die sowohl den RTS Control Frame von A als auch den CTS Control Frame von B empfängt, das Übertragungsmedium solange nicht beanspruchen, bis sie auch das ACK-Paket von B empfangen hat. Empfängt C nur den RTS Control Frame von A, so darf C das Übertragungsmedium für den Zeitraum nicht beanspruchen, der benötigt wird, um die im RTS Control Frame angegebene Datenmenge von A nach B zu übertragen. Empfängt C nur den CTS Control Frame von B, so muß C warten bis sie auch das von B ausgesendete ACK-Paket empfängt. Auf diese Weise wird verhindert, dass Stationen, die in der Reichweite von A und/oder B liegen und die Übertragung zwischen A und B durch Nutzung der gleichen Ressource stören könnten, die Ressource, die von A und B verwendet wird, nicht zugeteilt bekommen.

Soll zudem eine Übertragung zwischen zwei Stationen D und E stattfinden und empfängt weder D noch E weder den RTS Control Frame von A noch den CTS Control Frame von B, so kann die Übertragung in gleicher Weise stattfinden wie die Übertragung zwischen A und B. D und E befinden sich nicht in der Reichweite von A und B und somit stören die Übertragungen zwischen A und B sowie zwischen D und E sich nicht gegenseitig. In diesem Fall wird zufällig die gleiche Ressource doppelt verwendet. Somit ist in Systemen nach dem Standard IEEE 802.11 eine Mehrfachbelegung von Ressourcen möglich. Sie wird jedoch nicht geplant, wodurch die zur Verfügung stehenden Ressourcen nicht effizient genutzt werden.

In HIPERLAN/2, was beispielsweise in:
"Broadband Radio Access Networks (BRAN); HIPERLAN Type 2; Data Link Control (DLC) Layer; Part 1: Basic Data Transport Functions", ETSI TS 101 761-1, 2000,
beschrieben ist, werden zentrale Instanzen zur Organisation der Vergabe von Ressourcen verwendet. Existiert eine Anbindung ah ein Festnetz, so wird diese Instanz Access Point (AP) genannt. Liegt keine Infrastruktur vor, so übernimmt die Aufgaben des Access Point ein Central Controller (CC). Der Access Point bzw. Central Controller (AP/CC) übernimmt somit die Steuerung der Funkkommunikation aller Teilnehmerstationen, die in der Reichweite des Access Point bzw. Central Controller liegen und dieser Instanz zugeordnet sind.

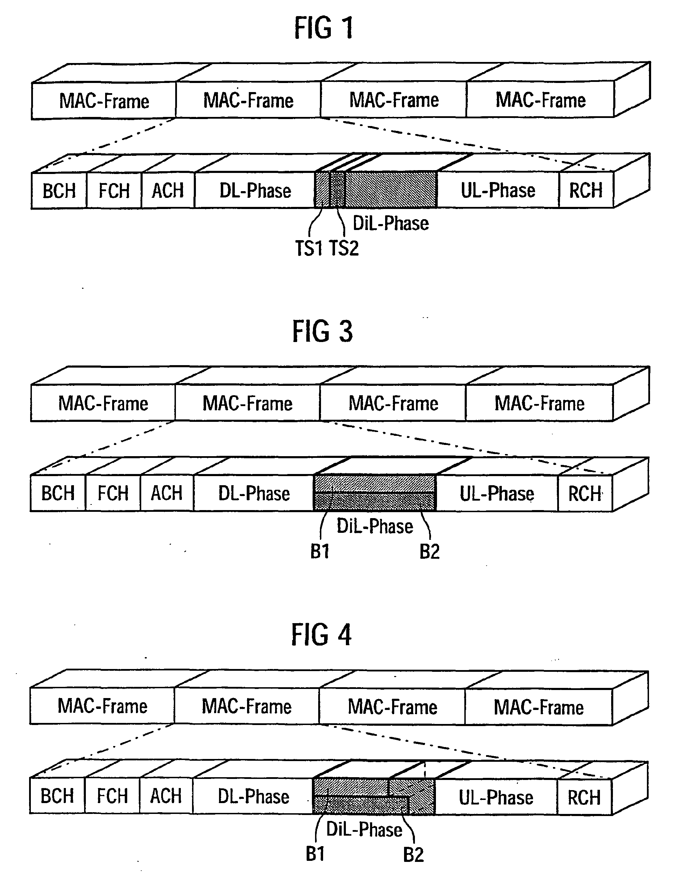

Die Organisation der Übertragung in HIPERLAN/2 ist TDMAbasiert (TDMA Time Division Multiple Access), wobei die zur Verfügung stehende Ressource für die Übertragung in sogenannte MAC-Frames mit einer Dauer von jeweils 2 ms eingeteilt wird, was in Figur 1 näher dargestellt ist. Hierzu wird ergänzend verwiesen auf:
"Broadband Radio Access Networks (BRAN); HIPERLAN Type 2; Data Link Control (DLC) Layer; Part 1: Basic Data Transport Functions", ETSI TS 101 761-1, 2000

Ein MAC-Rahmen MAC-Frame beginnt mit dem Broadcast Channel BCH, der die Netz-ID und eine Rahmensynchonisationssequenz sowie Informationen über die Startzeitpunkte des Frame Channels FCH und des Random Channels RCH beinhaltet. Mit dem darauffolgenden Frame Channel FCH wird für jede Teilnehmerstation, das einem Access Point bzw. Central Controller zugeordnet ist, die Information bereitgestellt, zu welchem Zeitpunkt in der Downlink-Phase DL-Phase sie Daten vom Access Point bzw. Central Controller empfangen muss und zu welchem Zeitpunkt sie in der Uplink-Phase UL-Phase Daten an den Access Point bzw. Central Controller senden darf. Direkte Kommunikation zwischen Teilnehmersationen (MT) findet in der Direct Link-Phase DiL-Phase statt. Dies ist beispielsweise näher beschrieben in:
"Broadband Radio Access Networks (BRAN); HIPERLAN Type 2; Data Link Control (DLC) Layer; Part 4: Extension for Home Environment", ETSI TS 101 761-4, 2000.

Die Zeitpunkte für den Beginn der jeweiligen Übertragungen in der DiL-Phase werden ebenfalls durch den Frame Channel FCH angegeben. Teilnehmerstationen können den Bedarf an Kapazität zur Übertragung von Daten in der DiL-Phase oder in der UL-Phase durch das Absetzten eines 'capacity request' in einem Zeitschlitz des RCH anmelden. Im darauffolgenden MAC-Frame werden sie über den Access Feedback Channel ACH informiert, ob für sie die benötigten Ressourcen bereitgestellt werden. Alle Zeitpunkte, zu denen eine Übertragung in der DiL-, oder DL- und UL-Phase beginnt, sind so abgestimmt, dass keine Übertragung zwischen zwei Kommunikationspartnern, die dem selben Access Point bzw. Central Controller zugeordnet sind, gleichzeitig stattfindet. Somit wird für alle Übertragungen zwischen Teilnehmerstationen und ihrem Access Point bzw. Central Controller sowie für die von dem jeweiligen Access Point bzw. Central Controller gesteuerten direkten Übertragungen zwischen Teilnehmerstationen keine Ressource zeitgleich mehrfach genutzt. Mehrfachbelegungen von Ressourcen sind dann möglich, wenn Teilnehmerstationen unterschiedlichen Access Points bzw. Central Controllern zugeordnet sind. In diesem Fall können von den jeweiligen Access Points bzw. Central Controllern zufällig die gleichen Übertragungszeiträume für ihre jeweiligen Teilnehmerstationen festgelegt werden. Sind Teilnehmerstationen, die unterschiedlichen Access Points bzw. Central Controllern zugeordnet sind, in gegenseitiger Reichweite, so kann es in diesem Fall zu gegenseitigen Störungen der Übertragungen kommen.

Aus US 4,534,061 A ist ein mobiles Funksystem bekannt, das eine vorbestimmte Anzahl von Kontrollkanälen benutzt, über welche eine so genannte Hand-Shake-Routine ausgeführt wird, um die Verfügbarkeit einer gerufenen Station zu bestimmen, bevor einer einer begrenzten Anzahl von Sprechkanälen für die Kommunikation zwischen einer rufenden und einer gerufenen Station zugeteilt wird.

Der Erfindung liegt die Aufgabe zu Grunde, ein Verfahren und ein Funkkommunikationssystem der eingangs genannten Art aufzuzeigen, welche einen sparsamen Umgang mit den Funkressourcen beziehungsweise eine bessere Ausnutzung der Funkressourcen mit sich bringen.

Die Aufgabe wird für das Verfahren mit den Merkmalen des Anspruchs 1 und für das Funkkommunikationssystem mit den Merkmalen des Anspruchs 5 gelöst.

Vorteilhafte Ausgestaltung und Weiterbildungen sind Gegenstand der abhängigen Ansprüche.

Erfindungsgemäß werden zumindest teilweise von der mindestens einen zentralen Instanz Ressourcen für eine direkte Kommunikation zwischen jeweils mindestens zwei Teilnehmerstationen mehrfach vergeben.

Es wird vorgeschlagen, dass die Ressourcenvergabe bei direkter Kommunikation zwischen Teilnehmerstationen in selbstorganisierenden Netzen von einer zentralen Instanz überwacht und gesteuert werden kann. Eine derartige Instanz kann ein drahtloser Zugangspunkt (Access Points, APs) zu einem Backbone-Netz oder ein fester/mobiler Central Controller (CC) sein. Die APs/CCs kontrollieren das Funkmedium und damit die Kommunikation zwischen AP/CC und den ihnen zugeordneten Teilnehmerstationen sowie die Kommunikation zwischen den Teilnehmerstationen.

Die Erfindung basiert auf der Idee, um eine effizientere Nutzung der verfügbaren Ressourcen zu erzielen, Ressourcen in selbstorganisierenden Funkkommunikationssystemen bei direkter Kommunikation zwischen mobilen Endgeräten mehrfach auszunutzen, wenn die Vergabe dieser Ressourcen von einer zentralen Instanz überwacht und gesteuert wird. Die Übertragungen zwischen den mobilen Endgeräten, die die gleiche Ressource verwenden, darf dabei nicht durch die zu erwartende Interferenz beeinträchtigt werden.

Mit Vorteil ist daher vorgesehen, dass die mindestens eine zentralen Instanz die Ressourcen dann mehrfach vergibt, wenn die direkte Kommunikation der jeweils miteinander unter Nutzung derselben Ressourcen kommunizierenden mindestens zwei Teilnehmerstationen) bestimmten Qualitätsanforderungen genügt. Die' Qualitätsanforderungen können fix oder veränderbar sein.

Insbesondere vorteilhaft ist, wenn sich einerseits miteinander unter Nutzung derselben Ressourcen kommunizierende mindestens zwei erste Teilnehmerstationen und andererseits miteinander unter Nutzung derselben Ressourcen kommunizierende mindestens zwei zweite Teilnehmerstationen jeweils in unterschiedlichen Bereichen des Funkkommunikationssystems befinden, zwischen denen bei der Kommunikation unter Nutzung der Ressourcen im wesentlichen keine Interferenz besteht.

Die Erfindung nutzt aus, dass in einem selbstorganisierenden drahtlosen Funkkommunikationssystem, welches direkte Kommunikation zwischen Teilnehmerstationen bzw. mobilen Endgeräten (Mobile Terminals) erlaubt und in welchem die Vergabe der Funkressourcen von einer zentralen Instanz organisiert wird, Funkressourcen dadurch effizienter genutzt werden, dass sie für die direkte Kommunikation zwischen Teilnehmerstationen mehrfach von der zentralen Instanz vergeben werden, d.h. von den Teilnehmerstationen genutzt werden, sofern die Interferenzsituation dies ohne Beeinträchtigung der Qualität der jeweiligen Übertagung zwischen den Teilnehmerstationen erlaubt. Dies ist dann möglich, wenn die direkt miteinander kommunizierenden Teilnehmerstationen räumlich so weit von anderen miteinander kommunizierenden Teilnehmerstationen, welche die gleiche Ressource nutzen, entfernt oder anderweitig getrennt sind, so dass beispielsweise aufgrund der Funkfelddämpfung, Abschattung oder anderen topologiebedingten Ausbreitungseigenschaften keine nennenswerte Interferenz auftritt. Die Entscheidung über die mehrfache Vergabe der gleichen Ressource beruht demnach insbesondere auf der zuvor ermittelten Kenntnis über die Interferenzsituation, in der sich jede Teilnehmerstation bei Mehrfachausnutzung einer Ressource befinden würde.

Die Teilnehmerstationen können zumindest teilweise an die mindestens eine zentralen Instanz für eine direkte Funkkommunikation erreichbare Teilnehmerstationen melden.

Diese gewonnene Information über die Interferenzsituation der Teilnehmerstationen wird dabei der zentralen Instanz, d.h. üblicherweise dem Access Point respektive dem Central Controller, unter Verwendung geeigneter Protokolle zugeführt.

Beispielsweise durch Austausch der Informationen über die Interferenzsituationen der einzelnen Teilnehmerstationen zwischen den Access Points über das Backbone-Netz kann systemweit eine optimale Mehrfachausnutzung der verfügbaren Ressourcen erreicht werden.

Die zentralen Instanz kennt die Interferenzsituation in der sich jedes seiner Teilnehmerstationen befinden würde, wenn mehrere Teilnehmerstationen die gleiche Ressource nutzen würden.

Diese Information kann der zentralen Instanz beispielsweise von den Teilnehmerstationen selbst mitgeteilt werden. Jede Teilnehmerstation ermittelt seine erreichbaren Nachbarn und meldet diese Information an die zentrale Instanz. Die zentrale Instanz besitzt somit die Kenntnis, welche Teilnehmerstationen sich erreichen können, d.h. miteinander direkt kommunizieren können bzw. welche Teilnehmerstationen sich bei gleichzeitiger Ressourcennutzung gegenseitig stören, wenn sie nicht miteinander kommunizieren wollen. Damit ist in der zentralen Instanz auch bekannt, welche ihrer Teilnehmerstationen sich nicht erreichen können und sich somit bei direkter Kommunikation miteinander nicht gegenseitig stören. Wird von den Teilnehmerstationen der Bedarf an mehreren direkten Funkverbindungen zwischen jeweils zwei Teilnehmerstationen oder einer Gruppe von Teilnehmerstationen angemeldet, so können Ressourcen doppelt belegt werden. Dabei wird die direkte Kommunikation zwischen zwei Teilnehmerstationen oder mehreren Teilnehmerstationen (Multicast) von der kontrollierenden Station (AP/CC) bzw. zentralen Instanz organisiert.

Die Mehrfachbelegung von Ressourcen im DiL läßt sich beispielsweise bei HIPERLAN/2 einfach dadurch realisieren, dass im FCH für unterschiedliche DiLs, welche die gleiche Ressource nutzen sollen, der gleiche Übertragungszeitpunkt angegeben wird. Dadurch finden die entsprechenden Übertragungen im DiL gleichzeitig statt.

Durch das mehrfache Ausnutzen der gleichen Ressource wird die spektrale Effizienz des Systems erhöht. Darüber hinaus kann die vorgeschlagene Lösung auch zur Verbesserung der spektralen Effizienz in zellularen Systemen eingesetzt werden. Werden nach dem Stand der Technik in zellularen Systemen Ressourcen in benachbarten Zellen wiederverwendet, so kann es zu Interferenzen zwischen Teilnehmerstationen kommen, die unterschiedlichen Zellen zugeordnet sind. Mit dem vorgeschlagenen Verfahren wird ausgeschlossen, dass Teilnehmerstationen, die sich bei gemeinsamer Nutzung der gleichen Ressource gegenseitig stören können, nicht die gleichen Ressourcen verwenden. Durch den Austausch der Informationen zwischen verschiedenen Access Points über das Backbone-Netz über die Interferenzsituationen der von den Access Points kontrollierten Teilnehmerstationen, kann systemweit eine optimale Mehrfachausnutzung der zur Verfügung stehenden Ressourcen erreicht werden, unabhängig davon, ob ein zellulares Netzwerk oder ein nicht-zellulares Netzwerk vorliegt.

Erfindungsgemäß kann zur Vergabe von Funkressourcen in einem zellularen Funkkommunikationssystem mit mehreren Teilnehmerstationen, wobei das Funkkommunikationssystem mindestens eine zentrale Instanz zur Organisation der Vergabe von Funkressourcen umfasst, vorgesehen sein,dass Teilnehmerstationen zumindest teilweise an die mindestens eine zentralen Instanz für eine direkte Funkkommunikation erreichbare Teilnehmerstationen melden.

Das erfindungsgemäße Funkkommunikationssystem mit mehreren Teilnehmerstationen umfasst mindestens eine zentrale Instanz zur Organisation der Vergabe von Funkressourcen. Es sind Mittel vorgehen, dass zumindest teilweise von der mindestens einen zentralen Instanz Ressourcen für eine direkte Kommunikation zwischen jeweils mindestens zwei Teilnehmerstationen mehrfach vergeben werden.

Nachfolgend soll die Erfindung anhand von Figuren näher erläutert werden.

Hierbei zeigen:
- Fig. 1:: das Schema einer MAC-Rahmen-Struktur nach dem Stand der Technik,
- Fig. 2:: ein Beispiel eines erfindungsgemäßen Funkkommunikationssystems,
- Fig. 3:: eine beispielhafte MAC-Rahmen-Struktur zum erfindungsgemäßen Funkkommunikationssystem nach Fig. 2,
- Fig. 4:: eine andere beispielhafte MAC-Rahmen-Struktur zum erfindungsgemäßen Funkkommunikationssystem nach Fig. 2,
- Fig. 5:: ein Beispiel eines erfindungsgemäßen zellularen Funkkommunikationssystems.

Figur 1 wurde bereits oben näher beschrieben. Unterschiedliche Zeitschlitze TS1 und TS2 sind im dargestellten Beispiel in der DiL-Phase für die direkte Kommunikation zwischen jeweils zwei unterschiedlichen Kommunikationspartnern angezeichnet.

Ein einfaches Beispiel eines erfindungsgemäßen Funkkommunikationssystems zeigt Figur 2. Im Bereich B1 befinden sich die Teilnehmerstationen MT1, MT2 und MT3. Die die Teilnehmerstationen MT4 und MT5 halten sich im vom Bereich B1 räumlich getrennten Bereich B2 auf. Für die direkte Kommunikation zwischen den Teilnehmerstationen MT1 und MT2 hat die zentrale Instanz AP/CC ebenso wie für die direkte Kommunikation zwischen den Teilnehmerstationen MT4 und MT5 die Ressource R1 vergeben. Im Gegensatz dazu hat sie für die direkte Kommunikation zwischen den Teilnehmerstationen MT2 und MT3 die Ressource R2 vergeben.

Figur 3 zeigt ein Beispiel für die Struktur eines MAC-Frames, bei gleichzeitiger Belegung des gleichen Zeitschlitzes für die Kommunikation zwischen zwei unterschiedlichen MT-Paaren. Ein Paar von Teilnehmerstationen befindet sich beispielsweise im Bereich B1 und ein anderes Paar von Teilnehmerstationen befindet sich beispielsweise im Bereich B2. Dabei muß nicht notwendigerweise die Dauer der gleichzeitigen Übertragung die gleiche Länge haben, wie Figur 4 zeigt.

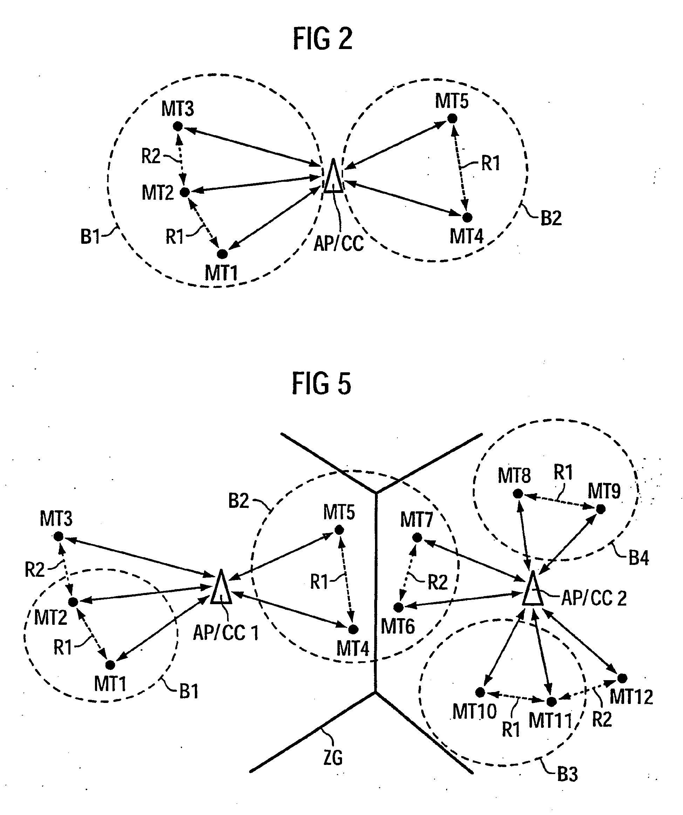

Figur 5 zeigt die entsprechende Anwendung der erfindungsgemäßen Idee in zellularen Systemen. Zellgrenzen ZG sind angedeutet. In den vier Bereichen B1, B2, B3 und B4 befinden sich die Teilnehmerstationen MT1, MT2, MT3, MT4, MT5, MT6, MT7, MT8, MT9, MT10, MT11, MT12. Hierbei sendet Teilnehmerstation MT1 zu Teilnehmerstation MT2, Teilnehmerstation MT5 zu Teilnehmerstation MT4, Teilnehmerstation MT9 zu Teilnehmerstation MT8 und Teilnehmerstation MT11 zu Teilnehmerstation MT10 unter Verwendung der gleichen Ressource R1, ohne dass die Übertragungen sich gegenseitig stören. Außerdem kommunizieren die Teilnehmerstationen MT3 mit MT2, MT6 mit MT7, MT11 mit MT12 ebenfalls unter Verwendung einer gleichen Ressource, nämlich der Ressource R2. Auch diese mehrfache Ressourcennutzung führt zu keinen gegenseitigen Störungen. Die zentralen Instanzen AP/CC 1 und AP/CC 2 organisieren die Vergabe der Funkressourcen, auch der mehrfach genutzten Funkressourcen R1 und R2.

## Patentansprüche

1. Verfahren zur Vergabe von Funkressourcen (R1, R2) in einem zumindest teilweise selbstorganisierenden Funkkommunikationssystem mit mehreren Teilnehmerstationen (MT1, MT2, MT3, MT4, MT5, MT6, MT7, MT8, MT9, MT10, MT11, MT12),
wobei das Funkkommunikationssystem mindestens eine zentrale Instanz (AP/CC; AP/CC 1, AP/CC 2) zur Organisation der Vergabe von Funkressourcen (R1, R2) umfasst,
**dadurch gekennzeichnet,**
**dass** zumindest teilweise von der mindestens einen zentralen Instanz (AP/CC; AP/CC 1, AP/CC 2) Ressourcen (R1, R2) für eine direkte Kommunikation (DiL-Phase) zwischen jeweils mindestens zwei Teilnehmerstationen (MT1, MT2, MT3, MT4, MT5, MT6, MT7, MT8, MT9, MT10, MT11, MT12) mehrfach vergeben werden.

2. Verfahren nach Anspruch 1,
**dadurch gekennzeichnet,**
**dass** die mindestens eine zentralen Instanz (AP/CC; AP/CC 1, AP/CC 2) die Ressourcen (R1, R2) dann mehrfach vergibt, wenn die direkte Kommunikation der jeweils miteinander unter Nutzung derselben Ressourcen (R1, R2) kommunizierenden mindestens zwei Teilnehmerstationen (MT1, MT2, MT3, MT4, MT5, MT6, MT7, MT8, MT9, MT10, MT11, MT12) bestimmten Qualitätsanforderungen genügt.

3. Verfahren nach Anspruch 1 oder 2,
**dadurch gekennzeichnet,**
**dass** sich miteinander unter Nutzung derselben Ressourcen (R1) kommunizierende mindestens zwei erste Teilnehmerstationen (MT1, MT2) und miteinander unter Nutzung derselben Ressourcen (R1) kommunizierende mindestens zwei zweite Teilnehmerstationen (MT4, MT5) jeweils in unterschiedlichen Bereichen (B1, B2) des Funkkommunikationssystems befinden, zwischen denen bei der Kommunikation unter Nutzung der Ressourcen (R1) im wesentlichen keine Interferenz besteht.

4. Verfahren nach einem der Ansprüche 1 bis 3,
**dadurch gekennzeichnet,**
**dass** TeiInehmerstationen (MT1, MT2, MT3, MT4, MT5, MT6, MT7, MT8, MT9, MT10, MT11, MT12) zumindest teilweise an die mindestens eine zentralen Instanz (AP/CC; AP/CC 1, AP/CC 2) für eine direkte Funkkommunikation erreichbare Teilnehmerstationen (MT1, MT2, MT3, MT4, MT5, MT6, MT7, MT8, MT9, MT10, MT11, MT12) melden.

5. Funkkommunikationssystem mit mehreren Teilnehmerstationen (MT1, MT2, MT3, MT4, MT5, MT6, MT7, MT8, MT9, MT10, MT11, MT12),
welches mindestens eine zentrale Instanz (AP/CC; AP/CC 1, AP/CC 2) zur Organisation der Vergabe von Funkressourcen (R1, R2) umfasst,
**dadurch gekennzeichnet,**
**dass** Mittel vorgehen sind, dass zumindest teilweise von der mindestens einen zentralen Instanz (AP/CC; AP/CC 1, AP/CC 2) Ressourcen (R1, R2) für eine direkte Kommunikation (DiL-Phase) zwischen jeweils mindestens zwei Teilnehmerstationen (MT1, MT2, MT3, MT4, MT5, MT6, MT7, MT8, MT9, MT10, MT11, MT12) mehrfach vergeben werden.

6. Funkkommunikationssystem nach Anspruch 5,
**dadurch gekennzeichnet,**
**dass** die mindestens eine zentralen Instanz (AP/CC; AP/CC 1, AP/CC 2) mit Mitteln zum Empfang von Meldungen ausgestattet sind, so dass Teilnehmerstationen (MT1, MT2, MT3, MT4, MT5, MT6, MT7, MT8, MT9, MT10, MT11, MT12) zumindest teilweise an die mindestens eine zentralen Instanz (AP/CC; AP/CC 1, AP/CC 2) für eine direkte Funkkommunikation erreichbare Teilnehmerstationen (MT1, MT2, MT3, MT4, MT5, MT6, MT7, MT8, MT9, MT10, MT11, MT12) melden können.

7. Funkkommunikationssystem nach Anspruch 5 oder 6,
**dadurch gekennzeichnet,**
**dass** das Funkkommunikationssystem zumindest teilweise eine zellulare Struktur (ZG) aufweist.

## Claims

1. Method for allocating radio resources (R1, R2) in an at least partially self-organising radio communication system comprising a plurality of user stations (MT1, MT2, MT3, MT4, MT5, MT6, MT7, MT8, MT9, MT10, MT11, MT12),
wherein the radio communication system comprises at least one central entity (AP/CC; AP/CC 1, AP/CC 2) for organising allocation of radio resources (R1, R2),
**characterised in that**
resources (R1, R2) are allocated on a multiple basis at least partially by the at least one central entity (AP/CC; AP/CC 1, AP/CC 2) for direct communication (DiL phase) between at least two user stations in each case (MT1, MT2, MT3, MT4, MT5, MT6, MT7, MT8, MT9, MT10, MT11, MT12).

2. Method according to claim 1,
**characterised in that**
the at least one central entity (AP/CC; AP/CC 1, AP/CC 2) then allocates the resources (R1, R2) on a multiple basis when the direct communication between at least two user stations (MT1, MT2, MT3, MT4, MT5, MT6, MT7, MT8, MT9, MT10, MT11, MT12) communicating with one another in each case using the same resources (R1, R2) meets certain quality requirements.

3. Method according to claim 1 or 2,
**characterised in that** at least two first user stations (MT1, MT2) communicating with one another using the same resources (R1) and at least two second user stations (MT4, MT5) communicating with one another using the same resources (R1) are situated in different areas (B1, B2) of the radio communication system in each case, between which substantially no interference exists during the communication while using the resources (R1).

4. Method according to claims 1 to 3,
**characterised in that**
the user stations (MT1, MT2, MT3, MT4, MT5, MT6, MT7, MT8, MT9, MT10, MT11, MT12) at least partially report accessible user stations (MT1, MT2, MT3, MT4, MT5, MT6, MT7, MT8, MT9, MT10, MT11, MT12) to the at least one central entity (AP/CC; AP/CC 1; AP/CC 2) for a direct radio communication.

5. Radio communication system having a plurality of user stations (MT1, MT2, MT3, MT4, MT5, MT6, MT7, MT8, MT9, MT10, MT11, MT12) comprising at least one central entity (AP/CC; AP/CC 1, AP/CC 2) for organising allocation of radio resources (R1, R2),
**characterised in that**
means are provided whereby resources (R1, R2) are allocated on a multiple basis for a direct communication (DiL phase) between at least two user stations (MT1, MT2, MT3, MT4, MT5, MT6, MT7, MT8, MT9, MT10, MT11, MT12) in each case at least partially by the at least one central entity (AP/CC; AP/CC 1, AP/CC 2).

6. Radio communication system according to claim 5,
**characterised in that**
the at least one central entity (AP/CC; AP/CC 1, AP/CC 2) is equipped with means to receive reports so that user stations (MT1, MT2, MT3, MT4, MT5, MT6, MT7, MT8, MT9, MT10, MT11, MT12) can at least partially report accessible user stations (MT1, MT2, MT3, MT4, MT5, MT6, MT7, MT8, MT9, MT10, MT11, MT12) to the at least one central entity (AP/CC; AP/CC 1, AP/CC 2) for a direct radio communication.

7. Radio communication system according to claims 5 or 6,
**characterised in that**
the radio communication system has at least partially a cellular structure (ZG).

## Revendications

1. Procédé pour attribuer des ressources radio (R1, R2) dans un système de radiocommunication qui s'organise au moins partiellement de manière autonome et qui comprend plusieurs stations d'abonnés (MT1, MT2, MT3, MT4, MT5, MT6, MT7, MT8, MT9, MT10, MT11, MT12),
dans lequel le système de radiocommunication comporte au moins une instance centrale (AP/CC ; AP/CC 1, AP/CC 2) pour organiser l'attribution des ressources radio (R1, R2),
**caractérisé en ce que**
des ressources (R1, R2) sont attribuées plusieurs fois au moins partiellement par l'au moins une instance centrale (AP/CC ; AP/CC 1, AP/CC 2) pour une communication directe (phase DiL) respectivement entre au moins deux stations d'abonnés (MT1, MT2, MT3, MT4, MT5, MT6, MT7, MT8, MT9, MT10, MT11, MT12).

2. Procédé selon la revendication 1,
**caractérisé en ce que**
l'au moins une instance centrale (AP/CC ; AP/CC 1, AP/CC 2) attribue les ressources (R1, R2) plusieurs fois lorsque la communication directe des au moins deux stations d'abonnés (MT1, MT2, MT3, MT4, MT5, MT6, MT7, MT8, MT9, MT10, MT11, MT12) qui communiquent respectivement l'une avec l'autre en utilisant des mêmes ressources (R1, R2) satisfait à des exigences de qualité déterminées.

3. Procédé selon l'une ou l'autre des revendications 1 et 2,
**caractérisé en ce que**
les au moins deux premières stations d'abonnés (MT1, MT2) qui communiquent l'une avec l'autre en utilisant des mêmes ressources (R1) et les au moins deux secondes stations d'abonnés (MT4, MT5) qui communiquent l'une avec l'autre en utilisant des mêmes ressources (R1) se trouvent respectivement dans des zones différentes (Z1, Z2) du système de radiocommunication, entre lesquelles il n'existe essentiellement aucune interférence dans le cas de la communication utilisant des ressources (R1).

4. Procédé selon l'une des revendications 1 à 3,
**caractérisé en ce que**
des stations d'abonnés (MT1, MT2, MT3, MT4, MT5, MT6, MT7, MT8, MT9, MT10, MT11, MT12) signalent au moins partiellement des stations d'abonnés (MT1, MT2, MT3, MT4, MT5, MT6, MT7, MT8, MT9, MT10, MT11, MT12) pouvant être atteintes pour une radiocommunication directe, à l'au moins une instance centrale (AP/CC ; AP/CC 1, AP/CC 2).

5. Système de radiocommunication comprenant plusieurs stations d'abonnés (MT1, MT2, MT3, MT4, MT5, MT6, MT7, MT8, MT9, MT10, MT11, MT12),
lequel comporte au moins une instance centrale (AP/CC ; AP/CC 1, AP/CC 2) pour organiser l'attribution des ressources radio (R1, R2),
**caractérisé en ce que**
des moyens sont prévus pour que des ressources (R1, R2) soient attribuées plusieurs fois au moins partiellement par l'au moins une instance centrale (AP/CC ; AP/CC 1, AP/CC 2) pour une communication directe (phase DiL) respectivement entre au moins deux stations d'abonnés (MT1, MT2, MT3, MT4, MT5, MT6, MT7, MT8, MT9, MT10, MT11, MT12).

6. Système de radiocommunication selon la revendication 5,
**caractérisé en ce que**
l'au moins une instance centrale (AP/CC ; AP/CC 1, AP/CC 2) est équipée de moyens pour recevoir des messages de telle sorte que des stations d'abonnés (MT1, MT2, MT3, MT4, MT5, MT6, MT7, MT8, MT9, MT10, MT11, MT12) peuvent signaler au moins partiellement des stations d'abonnés (MT1, MT2, MT3, MT4, MT5, MT6, MT7, MT8, MT9, MT10, MT11, MT12) pouvant être atteintes pour une radiocommunication directe, à l'au moins une instance centrale (AP/CC ; AP/CC 1, AP/CC 2).

7. Système de radiocommunication selon l'une ou l'autre des revendications 5 et 6,
**caractérisé en ce que**
le système de radiocommunication présente au moins partiellement une structure cellulaire (ZG).
